# EUROPEAN PATENT SPECIFICATION

(11) **EP 3 376 171 B1**
(45) Date of publication and mention of the grant of the patent: **11.03.2020**
(21) Application number: 18163862.8
(22) Date of filing: 01.10.2012
(51) Int. Cl.: G01D 5/48

(54) **EXTENDED STROKE POSITION SENSOR**
ERWEITERTER HUBPOSITIONSSENSOR
CAPTEUR DE POSITION DE COURSE ÉTENDUE

(30) Priority: 14.08.2012 US 201261682818 P
(43) Date of publication of application: 19.09.2018
(62) Divisional of application: 12006827.5
(73) Proprietor: Hamlin Electronics Europe Ltd., Broadland Business Park Norwich, Norfolk, NR7 0WH (GB)
(72) Inventor: JOHNSON, Brian, Saltash, PL12 4DR (GB)
(74) Representative: Gislon, Gabriele

(56) References cited:
- WO-A1-94/11709
- US-A- 4 604 576
- US-A- 4 749 936

## Description

### BACKGROUND AND SUMMARY OF THE INVENTION

The present invention generally relates to position sensors and more particularly to an elongated or extended stroke position sensor comprising a waveguide and magnet.

Most non-contacting position sensors are based on Hall or magnetostrictive technology. The effective maximum stroke length is limited to about 20mm; beyond 20mm the ability to linearly sense the magnetic field strength limits the performance of the Hall sensor in terms of sensitivity and accuracy. This means more expensive and complex measurement systems are needed. This is particularly relevant when dealing with the measurement of the position of a piston in a cylinder; in most configurations of magnetic sensors this would mean the length of the magnet would be approximately the same length as the stroke, hence the cylinder size would have to be increased to include such a sensor.

The prior art has shown a magnetostrictive magnet-waveguide solution. A circular magnet is positioned about a magnetostrictive waveguide; the position of the circular magnet identifies the position to be measured. An electric wire extends the length of the waveguide. A pulse of current is placed upon the wire, which creates another magnetic field, which interferes with the circular magnet magnetic field thereby creating a torque pulse located at the position of the circular magnet. The time it takes for the torque pulse to move to a sensor head is correlated with the position of the circular magnet.

US patent 5,717,330 is representative of the above magnetostrictive magnet-waveguide solution.As can be appreciated the torque pulse moves down the waveguide at the speed of sound. While the speed is relatively fast, if the magnet is placed on a fast-moving machine head measurement inaccuracies will be produced.

The present invention solves the problem with the prior art.

Other position sensors using other forms of waveguides have also been proposed in the prior art, many of these sensors rely on the interaction with the local environment as they are primarily used to detect level of liquids, for example US5,249,463 by Schlumberger. This characteristic is avoided in the present invention. US,4,6014,576 A discloses another contactless position detector having a ferrite core surrounded by an electro-magnetical delay line in the form of a winding, whereby a movable magnet creates a local saturation of the core, which results in a partial reflection of electro-magnetical pulses propagating in the winding.

The present invention is specifically designed to measure the position of a target magnet and is electrically shielded from the external environment and includes a magnetic media which is primarily affected by the field from the magnet. This means the accuracy of the present invention is not affected when it is operated in environments which contain oil or other liquids.

The present invention relates to a method of determining position of the body, in particular relative to a certain datum and/or a certain element, according to claim 13; the invention also relates to a position sensor according to claim 1 and to a system according to claim 5. Preferred embodiments are recited in dependent claims. In greater detail, the present invention relates to an extended length sensor comprising a waveguide using a spiral-wound connector. The sensor employs a signal generator and signal receiver preferably located at one end of the waveguide. A quantity of magnetically soft material, in the form of a cylinder, is placed in proximity with the waveguide which is carrying an input signal.

The sensor preferably includes a shielding layer using an electrically conductive material such as copper which shields the sensor from the external environment and helps contain the electrical and magnetic field within the sensor, thereby reducing any EM-radiation emitted by the sensor.

The sensor includes a small magnet to induce a localized full or partial magnetic saturation in the magnetic material.

The magnet is closely positioned, typically less than 6mm - 10mm and is relatively movable to the waveguide. The local saturation in the magnetic material causes an impedance discontinuity in the waveguide and creates a reflection point for a signal in the waveguide.

Measuring the phase angle between the radio frequency (RF) input wave and the reflected wave allows the position of the magnet relative to the waveguide to be determined. Additionally, if the input signal is a single pulse or series of pulses the signal receiver or cooperating controller will be able to calculate the time of travel of the incident pulse to the point of magnetic saturation (the reflection point) and the return time which is proportional to the position of the magnet relative to the waveguide/magnetic sheet. As will be seen from the description below, the control circuitry compares the time between the rising edge of the input pulse and the time of receipt of the reflected wave.

It is provided a method of determining position of a body, utilizing a system comprising a waveguide which has a given length and an effective impedance, and which is positioned in close proximity to a soft or semi-soft quantity of magnetic material.

The system further comprises a magnet which may be a permanent magnet or an electro-magnet, closely positioned to the magnetic material and configured to locally fully or partially saturate the magnetic material.

The system further comprises a signal generator for generating a determinable first signal and a signal receiver for measuring a characteristic of the first signal or its reflection;

In an embodiment the method comprises the steps of:
a) generating the first signal and communicating the first signal to the waveguide
b) causing a relative motion between the waveguide and magnetic material saturating and the magnet
c) creating a reflection point in the waveguide to reflect the first signal at the relative location of the magnet by changing the effective impedance of the waveguide at the current relative location of the magnet. In an embodiment, the method including the step of measuring one of i) the phase difference between a first signal and its reflection at a determinable location along the waveguide and ii) measuring the time delay between the generation of the first signal and receipt of the reflection of the first signal and iii) correlating the phase difference or time delay with the relative position of the magnet.

In an embodiment the strength of the magnet is greater than a preset value to overcome measurement anomalies resulting from temperature or variation in air gap between the waveguide and the magnetic material.

In an embodiment, the system comprises a waveguide having a given length with an effective impedance, and a quantity of soft or semi-soft magnetic material positioned in close proximity to the waveguide.

In an embodiment, the system also comprises a magnet, movable relative to the waveguide and magnetic material, comprising either a permanent magnet or electro-magnet closely positioned to the magnetic material and configured to generate a local magnetic field sufficient to locally saturate magnetic material, wherein the local magnetic field configures to create a reflection point on the waveguide to reflect the first signal.

In an embodiment, the system comprises a signal generator for impressing a determinable first signal upon the waveguide at a first location and a signal receiver, located proximate the first position for sensing a characteristic of the first signal or its reflection, and a processor or electric circuit for correlating the sensed characteristic to the relative position of the magnet.

In an embodiment, the magnetic material utilized for such a system, encases the waveguide, the latter including an electrical screen.

In an embodiment, the waveguide comprises a copper core with a connector spiral wound about the core, the core and connector receivable within a cylinder of magnetic material, wherein the latter is made from soft or semi-soft magnetic material.

The above disclosed features may be combined in an embodiment.

### Brief Description of the Drawings

- Figure 1 shows the major components of one example of a position sensor comprising a waveguide.
- Figure 2 shows more details of a simple waveguide.
- Figure 3 shows the details of another embodiment of a waveguide.
- Figures 4 and 5 show a further embodiment of a waveguide.
- Figures 6 and 7 show a waveguide comprised in a sensor according to the invention.
- Figures 8 and 9 show another example of position sensor.
- Figure 10 shows a further example of position sensor.

### Detailed Description of the Drawings

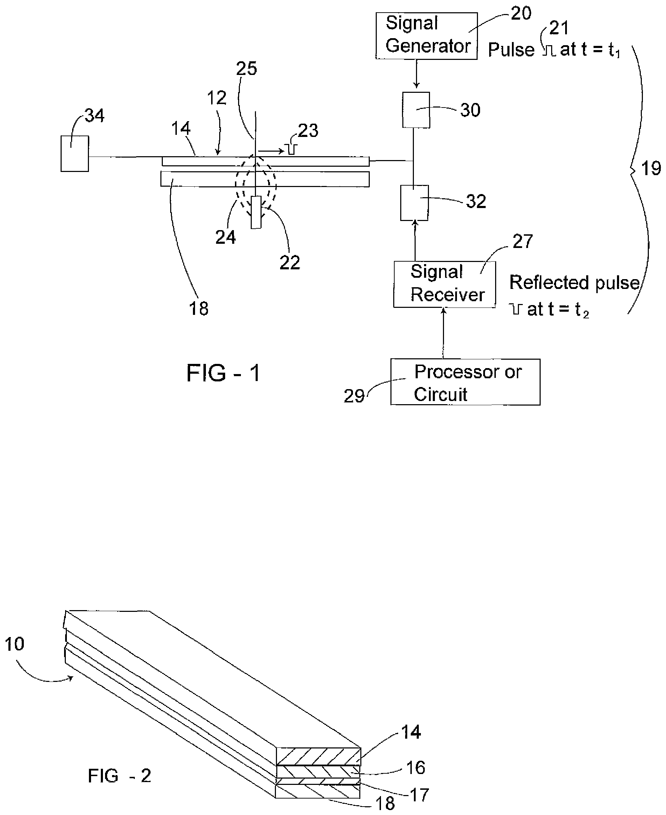

Figure 1 diagrammatically represents an example, which is not part of the invention, of an extended stroke position sensor 10 as well as a sensing system 10A incorporating the sensor 10. Sensor 10 comprises a waveguide 12 which can comprise a microstrip, stripline waveguide or even a rectangular waveguide that is formed by at least a single conductive strip 14, for example copper. The sensor 10 further includes a thin sheet of soft or semi-soft magnetic material 18 positioned in close proximity to the waveguide 12. A magnet 22 such as a permanent magnet (or electro-magnet) is movable relative to the waveguide 12, 14 and magnetic strip 18. The sensor 10 or sensing system 10A additionally includes control electrics 19 which can be packaged with the waveguide and magnetic strip 18 or separate therefrom.

Figure 1 inherently illustrates a distance measuring technique performed by the complementary sensing system 10A. If signal generator 20 is a pulse generator which periodically issues a single pulse or series of pulses 21 generated at a time t + t1, a reflected pulse 23 is generated at the point of impedance discontinuity in the waveguide 22.

This point of impedance discontinuity, i.e. the location of magnet 22, is generally shown by a dotted line and numeral 25; this pulse will be sensed by the signal receiver 27 at time t = t2.

The time difference between incident and reflective pulses is a measure of the position of the magnet 22 in relation to the waveguide 14 as determined in processor 29. For example, in one environment, the magnet 22 or waveguide and magnetic material can be affixed to a movable object such a movable head, such as a sewing head, a laser, a welding tip or a liquid float. The other of the magnet and waveguide and magnetic material can secured to a cooperating structure.

A signal generator 20 and signal receiver 29 are operatively connected to the wave guide 12, i.e. to the conductive strip 14. The magnet 22 is of sufficient strength to generate a magnetic field 24 capable of completely or partially magnetically saturating the magnetic sheet of material 18, which as mentioned is closely spaced relative to the waveguide. Magnet 22 can be a permanent magnet or electromagnet.

The waveguide 12 and the sheet of magnetic material 18 are preferably fixed relative to one another.

The waveguide has a given value of impedance, however, the characteristic impedance of the waveguide is strongly affected by the permeability of the material surrounding it, such as the magnetic material 18. The sensing system 10A includes various elements shown as blocks 30, 32 and 34 diagrammatically illustrating known types of impedance matching devices.

When the impedance of the waveguide is not accurately matched to its load or to the source, or if a discontinuity is created in the impedance of the waveguide, a reflected wave, originating at the point of the discontinuity will result.

This reflected wave 23 is reflected toward an end of the waveguide. Figure 2 shows a more complicated version of the sensor 10. In this embodiment, sensor 10 has a conductive layer 14 and substrate 16, wherein the substrate 16 has a conductive metal or conductive metalized rear sheet or layer 17. A thin sheet of soft or semi-soft magnetic material 18 is positioned adjacent the metalized sheet 17. To enhance the shielding effects of the layer 17 it may be grounded.

In the present invention, the introduction of the magnet 22 into an impedance matched system comprising the waveguide, magnetic material and impedance matching devices reduces the permeability of the magnetic material 18, this reduction being proportional to the strength of the magnet 22. If the magnet 22 is sufficiently strong, this reduction in permeability can approach zero in the limit.

Thus, the magnetic field of magnet 22 creates a localized, significant change in the characteristic impedance of the waveguide by changing the permeability of the magnetic material. This change results in a discontinuity in the effective impedance of the waveguide such that a travelling wave is reflected back to the source (or receiver) from this point of discontinuity.

For example the air gap or spacing between the waveguide and magnetic material is in the range of 0 mm to 15 mm. Generally, a semi-soft magnetic material is one characterized by a magnetic saturation field Hₛ ranging from 100A/m to 3000 A/m, and a soft magnetic material, having a magnetic saturation field Hₛ ranging from 3 A/m to 100 A/m.

Another benefit of the present invention is the magnetic material 18 effectively shields the waveguide 12 from disturbances created in a local environment, which is a deficiency of the Schlumberger patent.

Additionally, the magnetic material 18 functions to contain the electric and magnetic waves in the waveguide to reduce interaction with the environment.

For example, if the waveguide is used as a liquid level sensor and partially immersed in a liquid without the magnetic material, the impedance of the waveguide would be unmatched and reflections would occur. With the magnetic material positioned on or close to the waveguide, the magnetic material shields the waveguide from external disturbances, the consequence of which is the impedance mismatch is effectively caused only by the introduction of the magnetic field of the magnet which creates the above-mentioned reflected wave. One important point is that the waveguide will be matched so that there are no reflections when a magnet is not present. As can be appreciated, the magnetic material does more than shield the waveguide; it is a functional part of the sensing system.

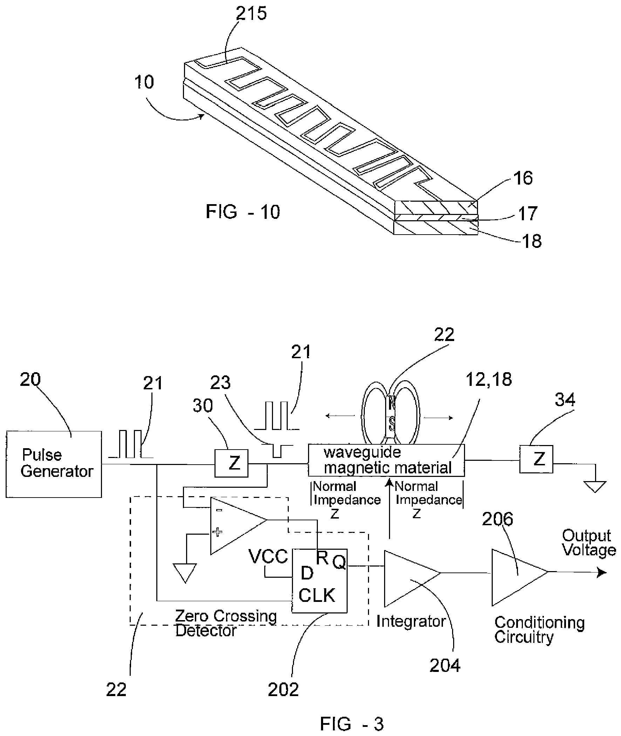

Figure 3 shows a more detailed version of the system of figure 1. In figure 3, a pulse generator 20 issues a pulse or series of pulses to the waveguide 12, the magnet 18 is schematically positioned below the waveguide and opposite a magnet 22. The magnet 22 is shown at a midpoint of the waveguide/magnet with its characteristic impedance shown equally distributed.

Impedance matching impedances 30 and 34 are also shown. The signal receiver 27 is realized as a zero crossing detector using an amplifier 200 and d-type flip-flop. In this setup the reflected pulse 23 is a negative pulse and the flip-flop is set on the rising edge of the input pulse 21 and is reset after the reflated pulse 23 crosses zero. The processor 29 of figure 1 is realized by an integrator 204 and conditioning circuit 206.

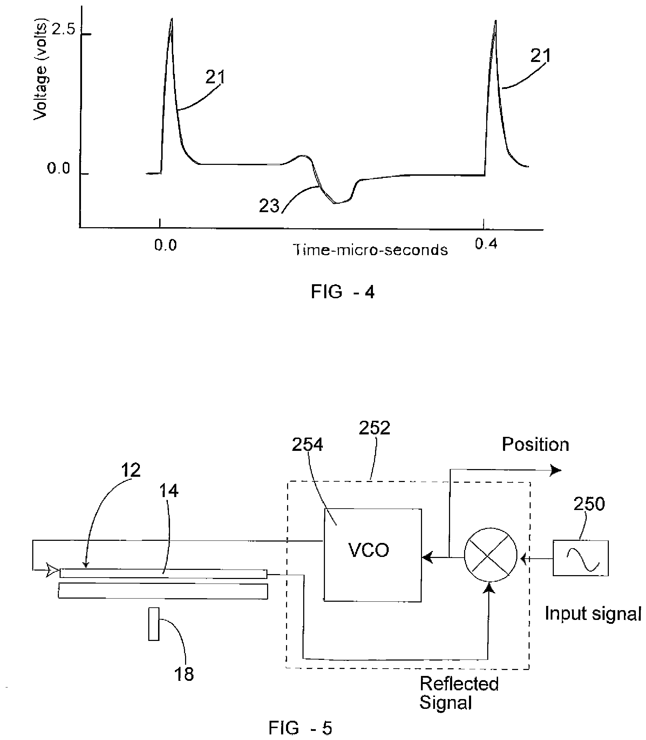

Figure 4 shows sample waveforms generated by the system 10A at the driven end of the waveguide.

Reference is made to figure 5 which shows a variation of the system in figure 1.

Here the signal generator is shown as a periodic waveform generator 250 and the signal receiver as well known phase detector 252 which includes a voltage controlled oscillator (VCO) 254. The output of the phase detector is a signal representative of the phase difference between the periodic reference signal 21 having a frequency f1 and the reflected, return or feedback signal 23, also having a frequency f1, but displaced in phase relative to the reference signal.

The output of the VCO 32 is a constant amplitude signal having a frequency that varies with measured phase difference between the reference signal and the output or a feedback signal SF.

In essence, by measuring the phase between the initial time of the reference signal and the reflected signal allows the position of the magnet relative to the waveguide to be determined.

In the preferred embodiment the thickness of the magnetic material 22 from the waveguide is in the range of approximately 0.1mm to 10mm; 1mm appears to be preferred.

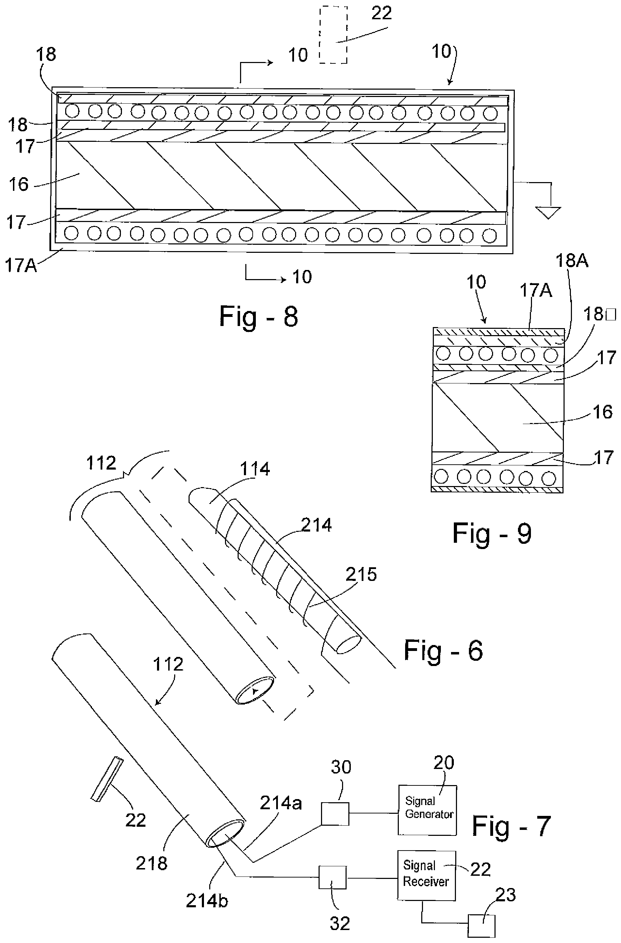

Reference is made to figures 6 and 7 which show an embodiment of the invention.

The waveguide 112 is constructed with a central copper core 114 with a second conductor, such as wire 214 wound about the core in a spiral 215. The extended length of the wire wound effectively has the benefit of creating a longer waveguide in a smaller package.

Additionally, the use of the spiral wound second conduction 214 provides an increased mechanical efficiency where a small linear movement of the magnet along the axis of the waveguide corresponds to a longer distance the reflected wave has to travel along the spiral. This construction has a benefit for improving accuracy and slowing down the pulses and making the electronics simpler to realise.

Figure 7 shows the core 114 and conductor 214 positioned within a cylindrical housing formed of a soft or semi-soft magnetic material 218. The ends of the wire 214a and 214b are respectively connected to impedance matching devices and to a signal generator and signal receiver.

Figures 8 and 9 show a further example, which is not part of the invention, of sensor 10. In this sensor 10, the substrate 16 is covered top and bottom with a thin conductive layer 17 which further isolates the waveguide from the environment.

The side of the sensor 10 facing the magnet is referred to as the active side. Sensor 10 further includes a first magnet layer 18. A wire coil 215 spirally envelopes the first layer of magnetic material 18, layers 17 and the substrate. Wire 215 should be insulated from the layers 17, for example the wire could include an electrically insulative coating.

A second layer of magnet material 18A covers the wire 215 on the active side of the sensor 10. The above structure is further covered by a thin layer of conductive material 17A, for example, a thin copper sheet or tape or foil. Additionally, the distance between the magnet and the active side of the sensor should be sufficient to locally saturate the waveguide and, depending upon the strength of the magnet, may be about 6mm.

Figure 10 shows another example, which is not part of the invention, of sensor 10 comprised of a substrate 16 with the magnetic material on the underneath side of the substrate. The conductive layer 17 of figure 3 has been replaced by a conductor 215A shaped in a zigzag or spiral-like configuration which is etched or otherwise deposited on the substrate. This construction yields a waveguide having an effective length similar to the one shown in figure 6.

Many changes and modifications in the above-described embodiment of the invention can, of course, be carried out without departing from the scope thereof.

Accordingly, that scope is intended to be limited only by the scope of the appended claims.

## Claims

1. An extended stroke position sensor comprising:
a waveguide (112) having a given characteristic impedance, the waveguide configured to receive a first signal; a magnet (22) movable relative to said waveguide (112); and
a cylinder of magnetic material (218) positioned in close proximity to the waveguide (112), the cylinder of magnetic material (218) comprising soft or semi-soft magnetic material, wherein the magnetic material is configured to cause an impedance discontinuity in the waveguide when the magnetic material is saturated by a local magnetic field generated by said magnet (22), the impedance discontinuity configured such that the first signal is reflected at the point of the impedance discontinuity, wherein the waveguide comprises a copper core (114) and a conductive wire (215) wound along a longitudinal axis of the core (114) in a spiral, the core and the spiral wound conductive wire being receivable within the cylinder of magnetic material (218);
wherein the cylinder of magnetic material encases the waveguide.

2. The sensor according to claim 1, further comprising a first conductive layer disposed on the waveguide, the first conductive layer electrically coupled to the signal generator and the signal receiver.

3. The sensor according to claim 2, further comprising a second conductive layer disposed between the waveguide and the magnetic material, the second conductive layer configured to shield the waveguide from electrical interference.

4. The sensor according to claim 3, wherein the second conductive layer is grounded.

5. A position sensing system comprising
an extended stroke position sensor according to any of claims 1-4 and comprising:
a waveguide (112) having a given characteristic impedance;
a magnet (22)
a cylinder of magnetic material (218) positioned in close proximity to the waveguide (112), the cylinder of magnetic material comprising soft or semi-soft magnetic material, wherein the waveguide (112) comprises a copper core (114) and a conductive wire (215) wound along a longitudinal axis of the core in a spiral, the core and the spiral wound conductive wire (215) being receivable within the cylinder of magnetic material (218);
a signal generator (20) communicatively coupled to the waveguide; a signal receiver (27) connected to said waveguide (112), the signal generator (20) is configured to generate a first signal and communicate the first signal to the waveguide;
one or more impedance matching devices (30, 32, 34) electrically coupled to the waveguide (112) and configured such that the waveguide is impedance matched with the signal generator and the signal receiver;
said magnet (22) being movable relative to the waveguide (112) of the extended stroke position sensor. the magnet (22) being configured to generate a magnetic field sufficient to locally saturate the magnetic material, wherein the magnetic material is configured to cause an impedance discontinuity in the waveguide (112) such that the first signal is reflected at the point of the impedance discontinuity and communicated to the signal receiver (27; and
wherein the cylinder of magnetic material encases the waveguide.

6. The system according to claim 5, further including a position sensor circuit communicatively coupled to the signal receiver (27), the position sensor circuit configured to determine the position of the magnet relative to the extended stroke position sensor based in part on the first signal and the reflected signal as received by the signal receiver (27).

7. The system according to claim 5 or 6, wherein the magnet (22) comprises either a permanent magnet or an electro-magnet.

8. The system according to any claim 5 to 7, the extended stroke position sensor further comprising a first conductive layer (214) disposed on the waveguide (112), the first conductive layer electrically coupled to the signal generator and the signal receiver.

9. The system according to claim 8, the extended stroke position sensor further comprising a second conductive layer disposed between the waveguide and the magnetic material, the second conductive layer configured to shield the waveguide from electrical interference.

10. The system according to claim 9, wherein the second conductive layer is grounded.

11. The system according to claim 5, wherein a first end of the conductive wire is electrically coupled to the signal generator and a second end of the conductive wire is electrically coupled to the signal receiver.

12. The system according to claim 5, wherein the signal generator is configured to repeatedly generate a series of pulses.

13. A method of determining a position of a moveable object comprising:
generating a first signal by a signal generator (20);
communicating the first signal to a waveguide (112) of an extended stroke position sensor, the extended stroke position sensor comprising the waveguide (112) and a cylinder of magnetic material (218) positioned in close proximity to the waveguide (112), the cylinder of magnetic material (218) comprising soft or semi-soft magnetic material, wherein the waveguide (112) comprises a copper core (114) and a conductive wire (214, 215) wound along a longitudinal axis of the core (114) in a spiral, the core and the spiral wound conductive wire being receivable within the cylinder of magnetic material (218);
moving a magnet (22) into close proximity to the waveguide (112) of the extended stroke position sensor, the magnet (22) configured to generate a magnetic field sufficient to locally saturate the magnetic material, wherein the magnetic material configures to cause an impedance discontinuity in the waveguide (112) such that the first signal is reflected at the point of the impedance discontinuity;
communicating the reflected signal to a signal receiver (27); and
determining the position of the moveable object based on the received first signal and the received reflected signal;
wherein the cylinder of magnetic material encases the waveguide (112).

14. The method according to claim 13, wherein determining the position of the moveable object comprises: measuring the time delay between the generation of the first signal and the receipt of the reflected signal; and correlating the time delay with the position of the moveable object.

15. The method according to claim 13, wherein determining the position of the moveable object comprises: measuring the phase difference between the first signal and the reflected signal; and correlating the phase difference with the position of the moveable object.

## Patentansprüche

1. Sensor für die Position eines verlängerten Hubs, umfassend:
einen Wellenleiter (112) mit einer gegebenen charakteristischen Impedanz, wobei der Wellenleiter konfiguriert ist, um ein erstes Signal zu empfangen;
einen Magneten (22), der relativ zu dem Wellenleiter (112) bewegbar ist; und
einen Zylinder aus magnetischem Material (218), der in Nähe des Wellenleiters (112) angeordnet ist, wobei der Zylinder aus magnetischem Material (218) weiches oder halbweiches magnetisches Material aufweist, wobei das magnetische Material konfiguriert ist, um eine Impedanzdiskontinuität in dem Wellenleiter zu verursachen, wenn das magnetische Material durch ein von dem Magneten (22) erzeugtes lokales Magnetfeld gesättigt ist, wobei die Impedanzdiskontinuität derart ausgestaltet ist, dass das erste Signal am Punkt der Impedanzdiskontinuität reflektiert wird, wobei der Wellenleiter einen Kupferkern (114) aufweist und einen leitenden Draht (215), der spiralförmig entlang einer Längsachse des Kerns (114) gewickelt ist, wobei der Kern und der spiralförmig gewickelte leitende Draht in dem Zylinder aus magnetischem Material (218) aufnehmbar sind;
wobei der Zylinder aus magnetischem Material den Wellenleiter umgibt.

2. Sensor nach Anspruch 1, ferner umfassend eine erste leitende Schicht, die auf dem Wellenleiter angeordnet ist, wobei die erste leitende Schicht elektrisch mit dem Signalgenerator und dem Signalempfänger gekoppelt ist.

3. Sensor nach Anspruch 2, ferner umfassend eine zweite leitende Schicht, die zwischen dem Wellenleiter und dem magnetischen Material angeordnet ist, wobei die zweite leitende Schicht konfiguriert ist, um den Wellenleiter vor elektrischer Interferenz abzuschirmen.

4. Sensor nach Anspruch 3, wobei die zweite leitende Schicht geerdet ist.

5. Positionserfassungssystem, umfassend
einen Sensor für die Position eines verlängerten Hubs nach einem der Ansprüche 1 bis 4 und umfassend:
einen Wellenleiter (112) mit einer gegebenen charakteristischen Impedanz;
einen Magneten (22),
einen Zylinder aus magnetischem Material (218), der in Nähe des Wellenleiters (112) angeordnet ist, wobei der Zylinder aus magnetischem Material weiches oder halbweiches magnetisches Material aufweist, wobei der Wellenleiter (112) einen Kupferkern (114) und einen leitenden Draht (215) aufweist, der spiralförmig entlang einer Längsachse des Kerns gewickelt ist, wobei der Kern und der spiralförmig gewickelte leitende Draht (215) innerhalb des Zylinders aus magnetischem Material (218) aufnehmbar sind;
einen Signalgenerator (20), der gekoppelt mit dem Wellenleiter in Verbindung steht; einen Signalempfänger (27), der mit dem Wellenleiter (112) verbunden ist, wobei der Signalgenerator (20) konfiguriert ist, um ein erstes Signal zu erzeugen und das erste Signal an den Wellenleiter zu übertragen;
eine oder mehrere Impedanzanpassungsvorrichtungen (30, 32, 34), die elektrisch mit dem Wellenleiter (112) gekoppelt sind und so konfiguriert sind, dass der Wellenleiter mit dem Signalgenerator und dem Signalempfänger impedanzangepasst ist;
wobei der Magnet (22) relativ zu dem Wellenleiter (112) des Sensors für die Position eines verlängerten Hubs bewegbar ist, wobei der Magnet (22) konfiguriert ist, um ein Magnetfeld zu erzeugen, das ausreicht, um das magnetische Material lokal zu sättigen, wobei das magnetische Material konfiguriert ist, um eine Impedanzdiskontinuität in dem Wellenleiter (112) zu verursachen, so dass das erste Signal an dem Punkt der Impedanzdiskontinuität reflektiert wird und an den Signalempfänger (27) übermittelt wird; und
wobei der Zylinder aus magnetischem Material den Wellenleiter umgibt.

6. System nach Anspruch 5, ferner umfassend eine Positionssensorschaltung, die kommunikativ mit dem Signalempfänger (27) gekoppelt ist, wobei die Positionssensorschaltung konfiguriert ist, um die Position des Magneten relativ zu dem Sensor für die Position eines verlängerten Hubs teilweise basierend auf dem ersten Signal und dem reflektierten Signal wie vom Signalempfänger (27) empfangen zu bestimmen.

7. System nach Anspruch 5 oder 6, wobei der Magnet (22) entweder einen Permanentmagneten oder einen Elektromagneten aufweist.

8. System nach einem der Ansprüche 5 bis 7, wobei der Sensor für die Position eines verlängerten Hubs ferner eine erste leitende Schicht (214) umfasst, die auf dem Wellenleiter (112) angeordnet ist, wobei die erste leitende Schicht elektrisch mit dem Signalgenerator und dem Signalempfänger gekoppelt ist.

9. System nach Anspruch 8, wobei der Sensor für die Position eines verlängerten Hubs ferner eine zweite leitende Schicht umfasst, die zwischen dem Wellenleiter und dem magnetischen Material angeordnet ist, wobei die zweite leitende Schicht konfiguriert ist, so dass sie den Wellenleiter vor elektrischer Interferenz schützt.

10. System nach Anspruch 9, wobei die zweite leitende Schicht geerdet ist.

11. System nach Anspruch 5, wobei ein erstes Ende des leitenden Drahts elektrisch mit dem Signalgenerator gekoppelt ist und ein zweites Ende des leitenden Drahts elektrisch mit dem Signalempfänger gekoppelt ist.

12. System nach Anspruch 5, wobei der Signalgenerator konfiguriert ist, um wiederholt eine Reihe von Impulsen zu erzeugen.

13. Verfahren zum Bestimmen einer Position eines beweglichen Objekts, umfassend:
Erzeugen eines ersten Signals durch einen Signalgenerator (20);
Übermitteln des ersten Signals an einen Wellenleiter (112) eines Sensors für die Position eines verlängerten Hubs, wobei der Sensor für die Position eines verlängerten Hubs den Wellenleiter (112) und einen Zylinder aus magnetischem Material (218) umfasst, der in Nähe des Wellenleiters (112) angeordnet ist, wobei der Zylinder aus magnetischem Material (218) weiches oder halbweiches magnetisches Material umfasst, wobei der Wellenleiter (112) einen Kupferkern (114) und einen leitenden Draht (214, 215) aufweist, der entlang einer Längsachse des Kerns (114) in einer Spirale gewickelt ist, wobei der Kern und der spiralförmig gewickelte leitende Draht innerhalb des Zylinders aus magnetischem Material (218) aufnehmbar sind;
Bewegen eines Magneten (22) in die Nähe des Wellenleiters (112) des Sensors für die Position eines verlängerten Hubs, wobei der Magnet (22) konfiguriert ist, um ein Magnetfeld zu erzeugen, das ausreicht, um das magnetische Material lokal zu sättigen, wobei das magnetische Material konfiguriert ist, um eine Impedanzdiskontinuität in dem Wellenleiter (112) zu verursachen, so dass das erste Signal an dem Punkt der Impedanzdiskontinuität reflektiert wird;
Übermitteln des reflektierten Signals an einen Signalempfänger (27); und
Bestimmen der Position des beweglichen Objekts basierend auf dem empfangenen ersten Signal und dem empfangenen reflektierten Signal;
wobei der Zylinder aus magnetischem Material den Wellenleiter (112) umgibt.

14. Verfahren nach Anspruch 13, wobei das Bestimmen der Position des beweglichen Objekts umfasst: Messen der Zeitverzögerung zwischen der Erzeugung des ersten Signals und dem Empfang des reflektierten Signals; und Korrelieren der Zeitverzögerung mit der Position des beweglichen Objekts.

15. Verfahren nach Anspruch 13, wobei das Bestimmen der Position des beweglichen Objekts umfasst: Messen der Phasendifferenz zwischen dem ersten Signal und dem reflektierten Signal; und Korrelieren der Phasendifferenz mit der Position des beweglichen Objekts.

## Revendications

1. Capteur de position de course étendue comprenant :
un guide d'onde (112) présentant une impédance caractéristique donnée, le guide d'onde étant configuré pour recevoir un premier signal ;
un aimant (22) mobile par rapport audit guide d'onde (112) ; et
un cylindre de matériau magnétique (218) positionné en étroite proximité du guide d'onde (112), le cylindre de matériau magnétique (218) comprenant un matériau magnétique souple ou semi-souple, dans lequel le matériau magnétique est configuré pour provoquer une discontinuité d'impédance dans le guide d'onde lorsque le matériau magnétique est saturé par un champ magnétique local généré par ledit aimant (22), la discontinuité d'impédance étant configurée de sorte que le premier signal soit réfléchi au point de la discontinuité d'impédance, dans lequel le guide d'onde comprend un noyau de cuivre (114) et un fil conducteur (215) enroulé le long de l'axe longitudinal du noyau (114) en spirale, le noyau et le fil conducteur enroulé en spirale pouvant être reçus à l'intérieur du cylindre de matériau magnétique (218) ;
dans lequel le cylindre de matériau magnétique encastre le guide d'onde.

2. Capteur selon la revendication 1, comprenant en outre une première couche conductrice disposée sur le guide d'onde, la première couche conductrice étant électriquement couplée au générateur de signal et au récepteur de signal.

3. Capteur selon la revendication 2, comprenant en outre une deuxième couche conductrice disposée entre le guide d'onde et le matériau magnétique, la deuxième couche conductrice étant configurée pour protéger le guide d'onde contre des interférences électriques.

4. Capteur selon la revendication 3, dans lequel la deuxième couche conductrice est mise à la terre.

5. Système de détection de position comprenant :
un capteur de position de course étendue selon l'une quelconque des revendications 1 et 4 et comprenant :
un guide d'onde (112) présentant une impédance caractéristique donnée ;
un aimant (22) ;
un cylindre de matériau magnétique (218) positionné en étroite proximité du guide d'onde (112), le cylindre de matériau magnétique comprenant un matériau magnétique souple ou semi-souple, dans lequel le guide d'onde (112) comprend un noyau de cuivre (114) et un fil conducteur (215) enroulé le long d'un axe longitudinal du noyau en spirale, le noyau et le fil conducteur (215) enroulé en spirale pouvant être reçus à l'intérieur du cylindre de matériau magnétique (218) ;
un générateur de signal (20) couplé, de manière à pouvoir communiquer, au guide d'onde ;
un récepteur de signal (27) connecté audit guide d'onde (112), le générateur de signal (20) est configuré pour générer un premier signal et communiquer le premier signal au guide d'onde ;
un ou plusieurs dispositifs d'adaptation d'impédance (30, 32, 34) électriquement couplés au guide d'onde (112) et configurés de sorte que le guide d'onde soit adapté en impédance au générateur de signal et au récepteur de signal ;
ledit aimant (22) étant mobile par rapport au guide d'onde (112) du capteur de position de course étendue, l'aimant (22) étant configuré pour générer un champ magnétique suffisant pour saturer localement le matériau magnétique, dans lequel le matériau magnétique est configuré pour provoquer une discontinuité d'impédance dans le guide d'onde (112) de sorte que le premier signal soit réfléchi au point de la discontinuité d'impédance et communiqué au récepteur de signal (27) ; et
dans lequel le cylindre de matériau magnétique encastre le guide d'onde.

6. Système selon la revendication 5, incluant en outre un circuit de capteur de position couplé, de manière à pouvoir communiquer, au récepteur de signal (27), le circuit de capteur de position étant configuré pour déterminer la position de l'aimant par rapport au capteur de position de course étendue sur la base en partie du premier signal et du signal réfléchi tels que reçus par le récepteur de signal (27).

7. Système selon la revendication 5 ou 6, dans lequel l'aimant (22) comprend un aimant permanent ou un électroaimant.

8. Système selon l'une quelconque des revendications 5 à 7, le capteur de position de course étendue comprend en outre une première couche conductrice (214) disposée sur le guide d'onde (112), la première couche conductrice étant électriquement couplée au générateur de signal et au récepteur de signal.

9. Système selon la revendication 8, le capteur de position de course étendue comprend en outre une seconde couche conductrice disposée entre le guide d'onde et le matériau magnétique, la seconde couche conductrice étant configurée pour protéger le guide d'onde contre des interférences électriques.

10. Système selon la revendication 9, dans lequel la seconde couche conductrice est mise à la terre.

11. Système selon la revendication 5, dans lequel une première extrémité du fil conducteur est électriquement couplée au générateur de signal et une seconde extrémité du fil conducteur est électriquement couplée au récepteur de signal.

12. Système selon la revendication 5, dans lequel le générateur de signal est configuré pour générer à répétition une série d'impulsions.

13. Procédé de détermination d'une position d'un objet mobile comprenant :
la génération d'un premier signal par un générateur de signal (20) ;
la communication du premier signal à un guide d'onde (112) d'un capteur de position de course étendue, le capteur de position de course étendue comprenant le guide d'onde (112) et un cylindre de matériau magnétique (218) positionné en étroite proximité du guide d'onde (112), le cylindre de matériau magnétique (218) comprenant un matériau magnétique souple ou semi-souple, dans lequel le guide d'onde (112) comprend un noyau de cuivre (114) et un fil conducteur (214, 215) enroulé le long d'un axe longitudinal du noyau (114) en spirale, le noyau et le fil conducteur enroulé en spirale pouvant être reçus à l'intérieur du cylindre de matériau magnétique (218) ;
le déplacement d'un aimant (22) en étroite proximité du guide d'onde (112) du capteur de position de course étendue, l'aimant (22) étant configuré pour générer un champ magnétique suffisant pour saturer localement le matériau magnétique, dans lequel le matériau magnétique est configuré pour provoquer une discontinuité d'impédance dans le guide d'onde (112) de sorte que le premier signal soit réfléchi au point de la discontinuité d'impédance ;
la communication du signal réfléchi à un récepteur de signal (27) ; et
la détermination de la position de l'objet mobile sur la base du premier signal reçu et du signal réfléchi reçu ;
dans lequel le cylindre de matériau magnétique encastre le guide d'onde (112).

14. Procédé selon la revendication 13, dans lequel la détermination de la position de l'objet mobile comprend : la mesure du retard entre la génération du premier signal et la réception du signal réfléchi ; et la corrélation du retard avec la position de l'objet mobile.

15. Procédé selon la revendication 13, dans lequel la détermination de la position de l'objet mobile comprend : la mesure de la différence de phase entre le premier signal et le signal réfléchi ; et la corrélation de la différence de phase avec la position de l'objet mobile.
